# EUROPÄISCHE PATENTSCHRIFT

(11) **EP 3 194 220 B1**
(45) Veröffentlichungstag und Bekanntmachung des Hinweises auf die Patenterteilung: **14.10.2020**
(21) Anmeldenummer: 15756383.4
(22) Anmeldetag: 21.08.2015
(51) Int. Cl.: B60T 7/04

(54) **FAHRZEUGEINRICHTUNG MIT STROMSPARENDEM BETRIEB EINER SIGNALEINGABEVORRICHTUNG**
VEHICLE DEVICE WITH POWER-SAVING OPERATION OF A SIGNAL INPUT APPARATUS
SYSTÈME DE VÉHICULE À MODE ÉCONOMIE D'ÉNERGIE D'UN DISPOSITIF D'ENTRÉE DE SIGNAL

(30) Priorität: 19.09.2014 DE 102014013942
(43) Veröffentlichungstag der Anmeldung: 26.07.2017
(73) Patentinhaber: KNORR-BREMSE Systeme für Nutzfahrzeuge GmbH, 80809 München (DE)
(72) Erfinder: HUBER, Christoph, 80333 München (DE); KRAEMER, Christian, 75438 Knittlingen (DE); ROTH, Matthias, 71665 Vaihingen an der Enz (DE); BENAD, Dieter, 01936 Königsbrück (DE); EISSNER, Markus, 92676 Eschenbach (DE); RIMPEL, Michael, 01945 Hohenbocka (DE)
(86) Internationale Anmeldenummer: PCT/EP2015/069198
(87) Internationale Veröffentlichungsnummer: WO 2016/041732

(56) Entgegenhaltungen:
- WO-A1-02/09989
- WO-A1-2007/028579
- DE-A1-102008 064 049
- DE-A1-102011 116 902

## Beschreibung

Die Erfindung geht aus von einer Fahrzeugeinrichtung eines Fahrzeugs, gemäß dem Oberbegriff von Anspruch 1.

Bei elektro-pneumatischen Bremseinrichtungen von modernen Nutzfahrzeugen ist in der Regel ein vorrangiger elektro-pneumatischer Betriebsbremskreis vorhanden, welchem ein elektrischer Kanal des dann elektro-pneumatischen Betriebsbremsventils bzw. Fußbremsmoduls (FBM) zugeordnet ist, d.h. mit Betätigung eines Betriebsbremsbetätigungsorgans (Fußbremspedal) des Betriebsbremsventils erzeugt eine Sensoreinrichtung ein elektrisches Betätigungssignal abhängig vom der Bremsanforderung entsprechenden Betätigungsweg oder Betätigungswinkel, welches zur Signalaufbereitung in eine Auswerteelektronik und dann von dort in ein zentrales elektronisches Bremssteuergerät eingesteuert wird, um durch eine entsprechende Ansteuerung von Magnetventilen bzw. Druckregelmodulen einen der Bremsanforderung entsprechenden Bremsdruck in pneumatische Betriebsbremszylinder einzusteuern.

Parallel hierzu bewirkt die Betätigung der Fußbremspedals des Betriebsbremsventils, dass ein mit dem Fußbremspedal verbundener Stößelkolben über eine Druckfeder einen Relaiskolben betätigt, welcher wiederum ein Doppelsitzventil des Betriebsbremsventils steuert, um einen der Bremsanforderung entsprechenden pneumatischen Steuerdruck für pneumatische Kanäle des Betriebsbremsventils zu erzeugen, die in nachrangigen pneumatischen Betriebsbremskreisen einen Bremsdruck in den Bremszylindern bilden, wenn der vorrangige elektrische Betriebsbremskreis aufgrund eines Defekts ausgefallen ist.

In dem beispielsweise aus WO 2012/076514 A1 bekannten, zur Erfassung einer Betriebsbremspedalposition verwendeten elektro-pneumatischen Betriebsbremsventil oder Fußbremsmodul ragt ein mit dem Betriebsbremspedal wirkverbundener Stößel in eine Ausnehmung des Stößelkolbens, welcher mit einem Federteller verbunden ist, der mittels besagter Druckfeder den Relaiskolben betätigt. Das Fußbremsmodul beinhaltet eine Sensoreinrichtung in Form von beispielsweise berührungslosen Wegmesssensoren, mit dem der Fahrerbetriebsbremswunsch und damit die Stellung des Fußbetriebsbremspedals erfasst und in einer Auswerteelektronik ausgewertet werden kann. Diese Sensoreinrichtung bzw. diese Auswerteelektronik wird bei ausgeschalteter Fahrzeugzündung nicht mit elektrischer Energie versorgt und kann somit in diesem Zustand weder für eine generelle Erkennung einer Betätigung des Fußbetriebsbremspedals noch für eine Erfassung von dessen Betäti- gungsgrad zwischen einer eine Nichtbetätigung repräsentierenden Stellung und einer eine maximale Betätigung repräsentierenden Stellung genutzt werden.

Bei einer oben beschriebenen elektro-pneumatischen Betriebsbremseinrichtung mit vorrangigem elektro-pneumatischem Betriebsbremskreis und nachgeordneten pneumatischen Betriebsbremskreisen fordert der Gesetzgeber, dass stets beide Bremskreise ansprechen, wenn der Fahrer das Fußbetriebsbremspedal betätigt. Dies muss auch dann der Fall sein, wenn ein mit einer solchen Betriebsbremseinrichtung ausgestattetes Fahrzeug bei ausgeschalteter Fahrzeugzündung bergab rollt.

Um bei ausgeschalteter Fahrzeugzündung und Fußbetriebsbremspedalbetätigung dennoch eine Versorgung der Sensoreinrichtung und der Auswerteelektronik mit elektrischer Energie zu gewährleisten, wird bei dem aus WO 2012/076514 A1 bekannten Fußbremsmodul eine elektronische Schaltung in Kombination mit einem Mikroschalter vorgeschlagen, der durch den Relaiskolben betätigt wird. Die Erkennung und Erfassung einer Fußbetriebsbremspedalbetätigung bei ausgeschalteter Fahrzeugzündung erfolgt dann über diesen Mikroschalter und die elektronische Schaltung. Unter einem Mikroschalter wird dabei ein elektrischer Schalter verstanden, dessen Kontakte im geöffneten Zustand weniger als 3 mm Abstand voneinander haben. Eine bekannte Bauform ist beispielsweise ein Mikroschalter mit schnappendem System. Weiterhin sind auch Bauformen als Öffner und Schließer sowie als Wechsler mit den drei Anschlüssen Öffnerkontakt, Schließkontakt und Schaltzunge bekannt. Der Schaltzustand des Mikroschalters ergibt sich durch Kontakt mit dem Relaiskolben im Fußbremsmodul. Durch ausreichende Betätigung des Bremspedals wird der Relaiskolben so weit nach unten bewegt, dass der Mikroschalter seinen Schaltzustand ändert. Das bekannte Fußbremsmodul enthält somit zwei unabhängige Erfassungssysteme, nämlich den oder die Wegmesssensoren mit zugeordneter Auswerteelektronik sowie den Mikroschalter mit zugeordneter elektronischer Schaltung, wobei der Mikroschalter lediglich die Zustände betätigt oder nicht betätigt und der Wegmesssensor den Betätigungsgrad des Fußbetriebsbremspedals erkennen kann. Ein solcher Mikroschalter beinhaltet aber stets einen mechanischen Kontakt. Dieser Kontakt unterliegt einer gewissen mechanischen Beanspruchung über die Lebensdauer des Fußbremsmoduls. Damit gehen Nachteile wie beispielsweise Verschleiß der Mikroschaltermechanik, Ausfall der Schaltfunktion durch äußere Verschmutzung, Korrosion der Schaltkontakte des Mikroschalters, notwendige Abdichtung des Mikroschalters gegenüber Umwelteinflüssen (Wasser, Fett), Einfrieren der Schaltmechanik bei Minustemperatur und Feuchtigkeit, Aufwand für Montage und Kontaktierung des Mikroschalters, und/oder Verschleiß des kontaktierenden Elements am Mikroschalter (Kontaktpin) einher.

Auch in DE 10 2008 064 049 A1 wird eine KFZ-Bremsbetätigungsanordnung beschrieben, mit einer Sensoreinheit zur Messung einer Betätigung eines Betätigungselements sowie mit einem diesbezüglich zusätzlichen als Schalter ausgebildeten Aufwecksensorelement, welches einen geringeren Energieverbrauch aufweist. Deshalb ist auch hier ein zusätzlicher Aufwand bzw. eine höhere Fehlerwahrscheinlichkeit mit den oben genannten Nachteilen gegeben.

Neben der oben beschriebenen elektro-pneumatischen Betriebsbremseinrichtung sind in einem modernen Fahrzeug weitere elektrische, elektro-pneumatische oder elektro-hydraulische Fahrzeugeinrichtungen vorhanden, bei welchen eine Signaleingabevorrichtung zur Eingabe von Anforderungssignalen eines Fahrer des Fahrzeugs in Bezug auf die Fahrzeugeinrichtung vorgesehen ist, welche eine Sensoreinrichtung beinhaltet, die einen Betätigungsgrad eines von dem Fahrer betätigbaren Betätigungsorgans der Signaleingabevorrichtung zwischen einer eine Nichtbetätigung repräsentierenden Stellung und einer eine maximale Betätigung repräsentierenden Stellung graduell erfasst und ein diesen Betätigungsgrad repräsentierendes Betätigungssignal erzeugt, sowie eine Auswerteelektronik, in welche das von der Sensoreinrichtung erzeugte Betätigungssignal zur Auswertung eingesteuert wird. Zu einer solchen Fahrzeugeinrichtung zählen insbesondere eine Parkbremseinrichtung mit einer Hand- oder Fußbedieneinrichtung als Signaleingabevorrichtung sowie einem Fußpedal- oder einem Handbetätigungsorgan als Betätigungsorgan, eine Kupplungseinrichtung mit einer Kupplungspedalbedieneinrichtung als Signaleingabevorrichtung sowie mit einem Kupplungsfußpedal als Betätigungsorgan oder eine Gaspedaleinrichtung mit einer Gaspedalbedieneinrichtung als Signaleingabevorrichtung sowie mit einem Gasfußpedal als Betätigungsorgan. In WO 02/09989 A1 werden ein System, ein Positionsgeber und eine Empfangseinrichtung einer Bremseinrichtung beschrieben, bei denen eine Weckfunktion dadurch realisiert ist, dass ein Wecksignal in einem ersten Kanal von mehreren Kanälen erzeugt wird, wobei vor einem Empfang dieses Wecksignals sich das System in einem Zustand mit niedrigerem Energieverbrauch befindet. In diesem Zustand sind einzelne oder alle Funktionsgruppen dieses ersten Kanals eingeschränkt aktiv. Diese Funktionsgruppen weisen Weckmittel auf, mit denen einzelne oder alle Funktionsgruppen weiterer Kanäle in einen Zustand mit höherem Energieverbrauch versetzt werden können und bei dem insbesondere die volle Funktionalität her- gestellt ist. Die Weckfunktion ermöglicht den Dauerbetrieb der Schaltungsanordnung in einem schlafenden Modus.

Die gattungsbildende DE 10 2011 116 902 A1 offenbart eine Bremseinrichtung mit einer nicht permanent elektrische Leistung aufnehmenden und in Bezug zu einer Steuereinrichtung zusätzlichen Aufweckelektronik. Bei einer durch Sensoren sensierten Betätigung eines Bremspedals (Schaltimpuls) versetzt dann die zusätzliche Aufweckelektronik die Steuereinrichtung von einem Ruhezustand in ihren Betriebszustand.

Der vorliegenden Erfindung liegt die Aufgabe zugrunde, eine Fahrzeugeinrichtung zu schaffen, welche eine hohe Verfügbarkeit bei geringem Mehraufwand bietet. Diese Aufgabe wird erfindungsgemäß durch die Merkmale von Anspruch 1 gelöst. Vorteilhafte Weiterbildungen der Erfindung sind Gegenstand der beigefügten Unteransprüche.

### Offenbarung der Erfindung

Am Beispiel einer elektrischen oder elektro-pneumatischen Betriebsbremseinrichtung als Fahrzeugeinrichtung wird bei eingeschalteter Fahrzeugzündung der Betätigungsgrad des Fußbetriebsbremspedals mittels der Sensoreinrichtung (z.B. berührungsloser induktiver Wegmesssensor) ermittelt und nach Auswertung durch die Auswerteelektronik an ein zentrales Bremssteuergerät der Betriebsbremseinrichtung übermittelt. Daraus resultiert dann die Umsetzung des Verzögerungswunsches des Fahrers in den vom Bremssteuergerät elektrisch gesteuerten Bremsaktuatoren.

Um nun bei ausgeschalteter Fahrzeugzündung eine Betätigung des Fußbetriebsbremspedals (auch hinsichtlich des jeweiligen Betätigungsgrades graduell) erfassen zu können, ist vorgesehen, dass die Sensoreinrichtung und/oder die Auswerteelektronik ausgebildet sind, in dem ausgeschalteten Zustand der Fahrzeugzündanlage einen Standby-Modus mit gegenüber einem bei eingeschalteter Zündung herrschendem Betriebsmodus verringerter elektrischer Energieaufnahme aus einer elektrischen Energiequelle einzunehmen, welche nicht ausreichend ist, um einen bestimmungsgemäßen Betrieb der Sensoreinrichtung und/oder der Auswerteelektronik in Form der Erfassung und Auswertung einer Betätigung des Betätigungsorgans zu gewährleisten, aber in Zyklen in einen Energiespar-Betriebsmodus gebracht zu werden, der den bestimmungsgemäßen Betrieb der Sensoreinrichtung und/oder der

Auswerteelektronik in Form der Erfassung und Auswertung einer Betätigung des Betätigungsorgans gewährleistet.

Mit anderen Worten werden die Sensoreinrichtung und/oder die Auswerteelektronik auch bei ausgeschaltetem Zustand der Fahrzeugzündanlage nicht von einer elektrischen Energieversorgung abgekoppelt, sondern weiterhin von dieser mit elektrischer Energie versorgt und zusätzlich in einen bei handelsüblichen Mikroprozessoren der Auswertelektronik meist ohnehin vorhandenen Standby-Modus versetzt, in dem ein wesentlich geringerer Verbrauch an elektrischer Energie vorherrscht als bei dem bei eingeschalteter Zündung vorliegenden Betriebsmodus.

In dem Standby-Modus, der zwischen den zyklischen Erhöhungen des Verbrauchs an elektrischer Energie vorliegt, ist der Energieverbrauch allerdings so gering, dass ein bestimmungsgemäßer Betrieb der Sensoreinrichtung und/oder der Auswerteelektronik in Form der Erfassung und Auswertung einer Betätigung des Betätigungsorgans nicht möglich ist. Deshalb wird die Energieaufnahme der Sensoreinrichtung und/oder der Auswerteelektronik in Zyklen und nur während einer relativ kurzen Zeitdauer im Rahmen des Energiesparbetriebs-Modus erhöht, um während einer solchen Zeitdauer den bestimmungsgemäßen Betrieb der Sensoreinrichtung und/oder der Auswerteelektronik in Form der Erfassung und Auswertung einer Betätigung des Betätigungsorgans zu ermöglichen.

Im Rahmen des Zyklus und genauer im Abstand von dessen Periode T findet daher ständig ein Wechsel zwischen dem Standby-Modus und dem Energiesparbetriebs-Modus der Sensoreinrichtung und/oder der Auswerteelektronik statt. Dieser Zyklus bzw. die Periode dieses Zyklus bzw. die Zeitdauer des Energiesparbetriebs-Modus wird dabei so bemessen, dass eine Betätigung des Betätigungsorgans in jedem Fall, wenn auch zeitlich geringfügig verzögert erfasst werden kann. Die maximale Verzögerung der Signalerfassung und -auswertung beträgt dann gerade einmal die Periode eines Zyklus. Mit anderen Worten wird damit eine Art von gepulster Erfassung und Auswertung der Signale der Sensoreinrichtung verwirklicht.

Im Vergleich zu einer bei eingeschalteter Fahrzeugzündung im Betriebsmodus ständig erfolgender Erfassung und Auswertung der Signale der Sensoreinrichtung durch die Auswerteeinrichtung laufen diese Funktionen bei ausgeschalteter Fahrzeugzündung im Rahmen der Erfindung in einem kürzeren Zeitraum und daher schneller ab, was aber bei entsprechender Anpassung der für den Prozess maßgebenden Parameter ausreichend ist, um eine zuverlässige Erfassung und Auswertung mit hinreichender Genauigkeit zu gewährleisten.

Damit nutzt die Erfindung eine bereits vorhandene Sensoreinrichtung/Auswerteelektronik-Kombination, mit welcher bei eingeschalteter Fahrzeugzündung ein Betätigungsgrad des Betätigungsorgans graduell erfasst wird, vorzugsweise zu einem ebensolchen Zweck auch bei ausgeschalteter Zündung, allerdings unter stark reduziertem Verbrauch an elektrischer Energie. Deshalb kann auf einen Mikroschalter des Stands der Technik als zusätzliches Erfassungssystem verzichtet werden.

Anstatt einer Erfassung und Auswertung des Betätigungsgrads des Betätigungsorgans liegt es im Rahmen der Erfindung, wenn während des Energiesparbetriebs-Modus auch nur erfasst wird, ob das Betätigungsorgan generell betätigt wurde oder nicht (binäres Signal). Dies ist ebenfalls unter einem bestimmungsgemäßen Betrieb zu subsummieren.

Wenn insbesondere die Sensoreinrichtung den Betätigungsgrad des Betätigungsorgans kontaktlos erfasst, entfallen auch die eingangs geschilderten Nachteile im Hinblick auf mechanischen Verschleiß, Umwelteinflüsse, Montage etc.

Die Aufnahme an elektrischer Energie im Energiesparbetriebs-Modus kann durch eine Reihe von Maßnahmen gegenüber dem Verbrauch im Betriebsmodus gesenkt werden. Dazu kann insbesondere, aber nicht darauf beschränkt, die Reduzierung der Zeitdauer des zyklisch aktivierten Energiesparbetriebs-Modus auf eine Zeitdauer, die gerade noch ausreichend ist, um eine Betätigung des Betätigungsorgans zu erfassen und auszuwerten.

Weiterhin kann die Auswerteelektronik und/oder die Sensoreinrichtung von einer von der elektrischen Energiequelle des Fahrzeugs stromversorgten Einrichtung des Fahrzeugs, z.B. von einem anderen elektronischen Steuergerät mit einem Spannungswert z.B. mit 5V versorgt werden, welche kleiner als der von der elektrischen Energiequelle gelieferte Spannungswert von z.B. 24V ist.

Insbesondere kann ein Spannungsregler oder Spannungswandler eingesetzt werden, der die Sensoreinrichtung und/oder die Auswerteelektronik mit einem gegenüber einem Spannungswert der elektrischen Energiequelle des Fahrzeugs geringeren Spannungswert versorgt.

Eine zu bevorzugende Maßnahme kann auch in einer Abtrennung nicht benötigter Schaltungsteile der Auswerteelektronik von der elektrischen Energieversorgung zumindest während des Energiesparbetriebs-Modus sein.

Weiterhin können auch bereits vorhandene Energiesparbetriebsarten eines Mikrocontrollers der Auswerteelektronik zur Reduktion des Energieverbrauchs während des Standby-Modus genutzt werden, beispielsweise durch Abschalten von Peripherie, Abschalten des Quarzes, Abschalten des Bustaktes usw.).

Durch die erfindungsgemäßen Maßnahmen ergibt sich der tatsächliche Energieverbrauch an elektrischer Energie als Durchschnittswert aus während der Zyklen im Standby-Modus verbrauchter sehr geringer elektrischer Energie und aus den während der impulsartigen und kurzzeitigen Zyklen im Energiesparbetriebs-Modus verbrauchter höherer Energie, wobei dieser Durchschnittswert durch Änderung des Verhältnisses zwischen der Zeitdauer im Standby-Modus und der Zeitdauer im Energiesparbetriebs-Modus anpassbar ist. Dabei spielt auch die Höhe des verbrauchten Stroms während des Energiesparbetriebs-Modus eine Rolle.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist bei ausgeschaltetem Zustand der Fahrzeugzündanlage und im Energiesparbetriebs-Modus die von der Sensoreinrichtung und/oder der Auswerteelektronik aufgenommene elektrische Energie geringer als in dem Betriebsmodus bei eingeschaltetem Zustand der Fahrzeugzündanlage. Dies trägt weiterhin zu einer Ersparnis an elektrischer Energie im Energiesparbetriebs-Modus bei, so dass die Gefahr einer Entladung der Bordbatterie im Energiesparbetriebs-Modus reduziert wird.

Damit sind vorzugsweise drei Verbrauchsniveaus an elektrischer Energie vorgesehen, wobei das niedrigste Verbrauchsniveau im Standby-Modus bei ausgeschalteter Fahrzeugzündung, das nächst höhere Verbrauchsniveau im Energiesparbetriebs-Modus ebenfalls bei ausgeschalteter Fahrzeugzündung und das höchste Verbrauchsniveau im Betriebsmodus bei eingeschalteter Fahrzeugzündung vorliegt.

Gemäß einer Weiterbildung erfasst die Sensoreinrichtung die Betätigung einer vom Betätigungsorgan direkt oder indirekt betätigten Komponente, wobei die Erfassung in Bezug zu dieser Komponente kontaktlos oder kontaktbehaftet ist, wobei eine kontaktlose Erfassung aus den oben genannten Gründen zu bevorzugen ist.

Insbesondere ist ein Generator vorgesehen, der in den Zyklen oder zyklisch ein Ereignissignal erzeugt, auf welches die Auswerteelektronik und/oder die Sensoreinrichtung hin veranlasst wird/werden, den Standby-Modus zu verlassen und den Energiesparbetriebs-Modus einzunehmen. Dabei wird der Energiesparbetriebs-Modus in Bezug auf die Zeitdauer t₀, in welcher der Standby-Modus herrscht, bevorzugt für eine kürzere Zeitdauer t₁ eingenommen oder für eine Zeitdauer t₁, welche wenigstens so lang wie die Zeitdauer t₀ des Standby-Modus ist.

Bei ausgeschalteter Fahrzeugzündanlage, wenn sich weitere elektronische Komponenten der Fahrzeugeinrichtung im Standby-Modus befinden und deswegen nicht den Zyklus auslösen können, in dem die Sensoreinrichtung und/oder der Auswerteelektronik zyklisch aus dem Standby-Modus in den Energiesparbetriebsmodus und wieder zurück gebracht wird/werden, wird dieser Zyklus daher bevorzugt ereignisgesteuert, beispielsweise mittels eines Zähler- oder Zeitgebersignals als Ereignissignal eines Generators ausgelöst. Dadurch können während des Standby-Modus bis auf den Generator die weitere Elektronik "schlafen", so dass im Standby-Modus nur für den Generator zusätzliche elektrische Energie bereitgestellt werden muss. Die Belastung bzw. Entladung der Fahrzeugbatterie ist auf diese Weise auf ein Minimum reduziert.

Gemäß einer Fortbildung dieser Maßnahmen ist der Generator in die Auswerteelektronik integriert. Weil aber die Sensorerfassungseinrichtung der Fahrzeugeinrichtung ohnehin ständig mit elektrischer Energie versorgt wird und die Auswerteelektronik nach einer Erfassung einer Betätigung des Betätigungsorgans dazu herangezogen wird, weitere elektronische Komponenten der Fahrzeugeinrichtung "aufzuwecken", d.h. vom Standby-Modus in den Betriebsmodus zu bringen, ist eine Integration des Generators in der Auswerteelektronik der Sensorerfassungseinrichtung vorteilhaft. Alternativ hierzu könnte der Generator aber auch eine separate Einheit darstellen oder aber in einer anderen elektronischen Komponente der Fahrzeugeinrichtung integriert sein.

Weiterhin kann der der Generator hinsichtlich einer Periode T der Zyklen des Ereignissignals, der Zeitdauer t₁, während der Energiesparbetriebs-Modus eingenommen wird, und/oder der Zeitdauer t₀, während der Standby-Modus eingenommen wird, frei programmierbar sein. Zudem kann der Generator ausgebildet sein, dass er durch eine Referenzzeitmessquelle zyklisch kalibrierbar ist.

Gemäß einer besonders zu bevorzugenden Maßnahme kommuniziert die Auswerteelektronik mit wenigstens einer Steuer- oder Regelelektronik des Fahrzeugsystems und ist ausgebildet, dass sie bei einer Erfassung einer Betätigung des Betätigungsorgans im Energiesparbetriebs-Modus ein Wecksignal für die wenigstens eine Steuer- oder Regelelektronik des Fahrzeugsystems erzeugt, um diese auch bei ausgeschalteter Zündung in ihren Betriebsmodus zu versetzen. Damit ist dann beispielsweise die gesamte Fahrzeugeinrichtung für den bestimmungsgemäßen Gebrauch z.B. für Betriebsbremsungen und/oder Parkbremsungen einsatzfähig.

Zu diesem Zweck kann die Auswerteelektronik mit der wenigstens einen Steuer- oder Regelelektronik der Fahrzeugeinrichtung mittels eines Datenbusses kommunizieren.

Bevorzugt weist die Auswerteelektronik der Signaleingabeeinrichtung wenigstens einen Mikroprozessoren auf.

Gemäß einer Weiterbildung weist die Auswerteelektronik der Signaleingabeeinrichtung wenigstens zwei Mikroprozessoren auf, von welchen lediglich ein erster Mikroprozessor im ausgeschalteten Zustand der Fahrzeugzündanlage in den Standby-Modus und zyklisch in den Energiesparbetriebs-Modus gebracht wird, während im ausgeschalteten Zustand der Fahrzeugzündanlage wenigstens ein weiterer Mikrocontroller der Auswerteelektronik vollständig außer Betrieb gesetzt ist und erst bei Einschalten der Zündung in Betrieb gesetzt wird. Weil nur ein einziger Mikroprozessor der wenigstens zwei Mikroprozessoren im Standby-Modus und auch zyklisch auch im Energiesparbetriebs-Modus betrieben wird, ist der Energieverbrauch in diesen Modi gering.

Dabei weist dieser erste Mikrocontroller der Auswerteelektronik bereits ab Herstellung einen Standby-Modus auf, in welchem der Energieverbrauch besonders gering ist.

Bei der Fahrzeugeinrichtung kann es sich um eine beliebige Fahrzeugeinrichtung mit den obigen Merkmalen handeln, insbesondere um eine elektrische, elektro-pneumatische oder elektro-hydraulische Fahrzeugeinrichtung mit einer Signaleingabevorrichtung zur Eingabe von Anforderungssignalen eines Fahrer des Fahrzeugs in Bezug auf die Fahrzeugeinrichtung, welche eine Sensoreinrichtung beinhaltet, die einen Betätigungsgrad eines von dem Fahrer betätigbaren Betätigungsorgans der Signaleingabevorrichtung zwischen einer eine Nichtbetätigung repräsentierenden Stellung und einer eine maximale Betätigung repräsentierenden Stellung graduell erfasst und ein diesen Betätigungsgrad repräsentierendes Betätigungssignal erzeugt, sowie eine Auswerteelektronik, in welche das von der Sensoreinrichtung erzeugte Betätigungssignal zur Auswertung eingesteuert wird.

Insbesondere handelt es sich bei der Fahrzeugeinrichtung um eine elektro-pneumatische oder elektrische Betriebsbremseinrichtung eines Fahrzeugs mit wenigstens einem elektrischen oder elektro-pneumatischen Betriebsbremskreis, beinhaltend eine Betriebsbremspedaleinrichtung als Signaleingabevorrichtung mit einem Fußbetriebsbremspedal als Betätigungsorgan und wenigstens einem elektrischen Kanal, welcher die Sensoreinrichtung sowie die Auswerteelektronik beinhaltet, wobei die Sensoreinrichtung einen Betätigungsweg und/oder einen Betätigungswinkel des Fußbetriebsbremspedals direkt oder indirekt erfasst.

Alternativ kann die Fahrzeugeinrichtung auch eine Parkbremseinrichtung mit einer Hand- oder Fußbedieneinrichtung als Signaleingabevorrichtung sowie einem Fußpedal- oder einem Handbetätigungsorgan als Betätigungsorgan sein, eine Kupplungseinrichtung mit einer Kupplungspedalbedieneinrichtung als Signaleingabevorrichtung sowie mit einem Kupplungsfußpedal als Betätigungsorgan oder eine Gaspedaleinrichtung mit einer Gaspedalbedieneinrichtung als Signaleingabevorrichtung sowie mit einem Gasfußpedal als Betätigungsorgan.

Zusammenfassend wird daher ein (programmierbares) Ereignissignal eines Generators genutzt, um zyklisch den Standby-Modus zu verlassen und den Energiesparbetriebs-Modus einzunehmen. Zusätzlich wird die Erfassungszeit der Sensoreinrichtung im Energiesparbetriebs-Modus vorzugsweise verkürzt. Weiterhin findet vorzugsweise eine zyklische Kalibrierung des Ereignissignal-Generators gegenüber einer genaueren Zeitquelle statt, um fertigungsbedingte und/oder umgebungstemperaturbedingte Abweichungen und/oder eine Änderung der Umgebungstemperatur zu korrigieren.

Insgesamt vorteilhaft kann mittels einer unter Verwendung der vorstehenden Maßnahmen erzielten gepulsten Erfassung des Sensorsignals bei nur geringfügiger zeitlicher Verzögerung eine Betätigung des Betätigungsorgans erfasst werden. Der tatsächliche Stromverbrauch ergibt sich dann durch Mittelwertbildung, d.h. als Mittelung aus dem geringen Stromverbrauch während des Standby-Modus und einem demgegenüber sehr kurzzeitigen und höheren Stromverbrauch während der Erfassungszeit. Durch Veränderung der Periode des Zyklus kann dann der durchschnittliche Stromverbrauch an die jeweils im Fahrzeug vorhandene elektrische Energiequelle angepasst werden.

Die Erfindung betrifft auch ein Fahrzeug mit einer Fahrzeugeinrichtung wie oben beschrieben.

### Zeichnung

Die Erfindung wird nachstehend anhand eines Ausführungsbeispiels unter Bezugnahme auf die beigefügte Zeichnung näher beschrieben. Es zeigen:
- Fig. 1: einen schematischen und vereinfachten Längsschnitt durch einen oberen Teil eines Fußbremsmoduls oder elektro-pneumatischen Betriebsbremsventils einer elektropneumatischen Betriebsbremseinrichtung als bevorzugtes Ausführungsbeispiels einer erfindungsgemäßen Fahrzeugeinrichtung;
- Fig. 2: ein Diagramm des Stromverbrauchs einer Sensoreinrichtung und einer Auswerteelektronik des Fußbremsmoduls von Fig.1 über der Zeit;
- Fig. 3: eine schematischen Schaltplan von elektrischen und elektronischen Komponenten des Fußbremsmoduls von Fig.1.

### Beschreibung des Ausführungsbeispiels

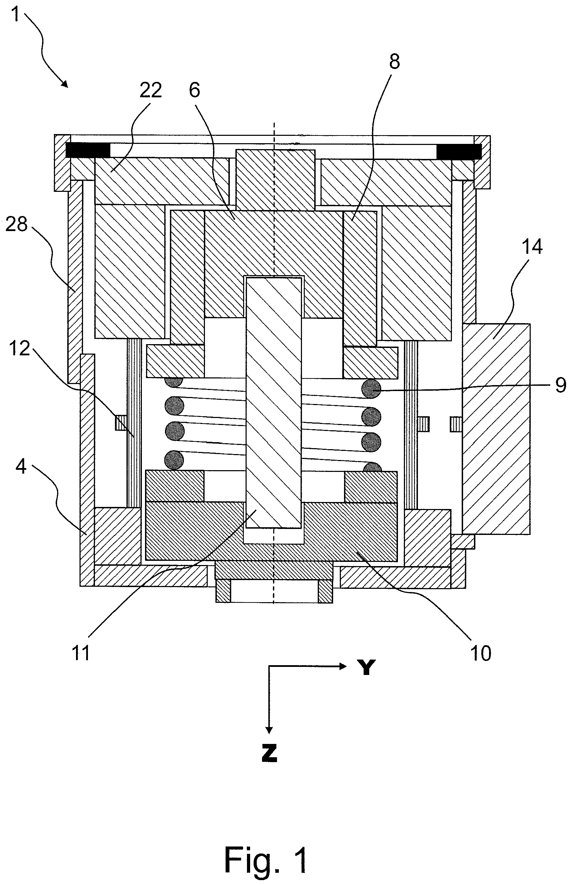

Der in Fig. 1 gezeigte obere Teil eines elektro-pneumatischen Betriebsbremsventils bzw. Fußbremsmoduls 1 ist Bestandteil einer elektro-pneumatischen Bremseinrichtung eines Nutzfahrzeugs als bevorzugtes Ausführungsbeispiel einer Fahrzeugeinrichtung gemäß der Erfindung. Die elektro-pneumatische Betriebsbremseinrichtung weist beispielsweise einen elektrischen Bremskreis und zwei pneumatische Betriebsbremskreise auf. Zur Vereinfachung sei hier nur ein einziger pneumatischer betriebsbremskreis angenommen.

Das Fußbremsmodul 1 beinhaltet unter anderem einen von einem nicht dargestellten Fußbetriebsbremspedal betätigten Stößel 6, welcher in einem Gehäuse 4 axial beweglich ist. Der Stößel 6 weist einen Federteller 8 auf, an welchem Federmittel, insbesondere eine Schraubendruckfeder-Anordnung 9, die beispielsweise aus zwei ineinander liegenden Schraubenfedern bestehen kann, abgestützt sind, und die andererseits wiederum über ein zwischenliegendes, tellerförmiges Element an ihrem gegenüberliegenden Ende an einem Ventilkolben 10 oder Relaiskolben 10 abgestützt sind.

In ein unteres Sackloch des Stößels 6 mit ihrem Schaft eingeschraubt und zentral und koaxial in Bezug zu den Federmitteln 9 angeordnet ist eine Stellschraube 11 mit ihrem Schraubenkopf in einer Ausnehmung des Relaiskolbens 10 axial beweglich geführt. Bei einer Axialbewegung des Stößels 6 aufgrund einer Betätigung des Fußbetriebsbremspedals bewegt sich der Schraubenkopf der Stellschraube 11 innerhalb der Ausnehmung des Relaiskolbens 10.

Der Relaiskolben 10 betätigt in bekannter Weise ein hier aus Maßstabsgründen nicht mehr dargestelltes Doppelsitzventil, um eine Arbeitskammer des Fußbremsmoduls entweder mit einer Entlüftung (Fahrstellung) oder mit einem Vorratsanschluss (Bremsstellung) zu verbinden, an welchen eine zu einem Druckluftvorrat führende Vorratsdruckleitung angeschlossen ist. Der Arbeitsanschluss steht über eine pneumatische Druckleitung des pneumatischen Betriebsbremskreises dann mit einem pneumatischen Anschluss eines Druckregelmoduls in Verbindung, welche den pneumatischen Betriebsbremskreis über ein integriertes Backup-Magnetventil an pneumatische Betriebsbremszylinder weiter schleift.

Ferner ist einen Teil einer Signaleingabevorrichtung bildender beispielsweise berührungsloser und nach induktivem Prinzip funktionierender Wegmessaufnehmer in Form von beispielsweise einer oder mehrerer Wegmessspulen 12 im Gehäuse 4 axial im Bereich eines Kolbenhemds des Stößels 6 angeordnet, wobei die wenigstens eine Wegmessspule 12 an eine in einem an das Gehäuse 4 an einem Umfangsabschnitt angeflanschten Gehäuse angeordneten Auswerteelektronik 14 elektrisch leitend verbunden ist.

Die wenigstens eine Wegmessspule 12 umschließt insbesondere das Kolbenhemd des Stößels 6, den Federteller 8, die Federmittel 9 und die Stellschraube 11 ringförmig und ist dabei innerhalb des Gehäuses 4 ortsfest angeordnet. Die wenigstens eine Wegmessspule 12 ist dadurch mit der Elektronikeinheit 14 elektrisch verbindbar, ohne dass eine solche Verbindung selbst einer Lageänderung unterliegt.

Ein Führungskörper 22 für den Stößel 6, welcher gleichzeitig einen Deckel für das Fußbremsmodul-Gehäuse 4 ausbildet, ist von oben her in das Fußbremsmodul-Gehäuse 4 eingesetzt bzw. dort zentriert. Ein oberer Anschlag für den Stößel 6 kann dann durch einen senkrecht zur axialen Bewegungsrichtung angeordneten Stirnflächenabschnitt des Federtellers 8 gebildet sein.

Dabei sind der Stößel 6 der Federteller 8, die Federmittel 9, der Relaiskolben 10, die Stellschraube 11 und der Führungskörper 22 im Wesentlichen, d. h. gegebenenfalls mit konstruktiv bedingt lokal abweichenden Ausformungen, koaxial angeordnet.

Eine obere Endposition des Stößelkolbens 6, in welcher dieser an den Führungskörper 22 anschlägt, markiert dann den Fahrzustand mit gelöster Betriebsbremse, bei welchem der Relaiskolben von einem im Gehäuse 4 axial geführten Ventilkörper des Doppelsitzventils abgehoben ist und dadurch Druckluft vom Arbeitsanschluss über die Arbeitskammer in die Entlüftung strömen kann, was eine Entlüftung des pneumatischen Betriebsbremskreises nach sich zieht. Die Wegmessspule 12 erzeugt dann dabei ein entsprechendes (Null-) Betriebsbremsanforderungssignal.

Wenn der Fahrer dann ausgehend vom Fahrzustand mit dem Fuß die Fußbetriebsbremsplatte betätigt, bewegt sich dadurch der Stößel 6 axial nach unten, wobei diese nach unten gerichtete Bewegung über die Federmittel 9 und gegebenenfalls die Stellschraube 11 auf den Relaiskolben 10 übertragen wird, welcher dann das Doppelsitzventil in Belüftungsstellung betätigt, wodurch der pneumatische Betriebsbremskreis belüftet wird.

Die wenigstens eine induktive Wegmessspule 12 verändert dann, wenn das Stößelhemd des Stößels 6 aufgrund einer Betätigung der Fußbetriebsbremsplatte tiefer in axialer Richtung in eine Öffnung eines die wenigstens eine Wegmessspule 12 tragenden Spulenkörpers eintaucht, ihre Induktivität L, was durch die Auswerteelektronik 14 detektierbar ist, welche dann mittels einer in ihr integrierten Schaltung aus der veränderten Induktivität L der wenigstens einen Wegmessspule 12 ein der axialen Bewegung des Stößels 6 proportionales elektrisches Betriebsbremsanforderungssignal bildet. Die Auswerteelektronik 14 ist über eine digitale Schnittstelle an eine hier nicht gezeigte Kommunikationsleitung, beispielsweise an einen Datenbus angeschlossen, an dem auch ein zentrales elektronisches Bremssteuergerät der elektropneumatischen Betriebsbremseinrichtung angeschlossen ist, so dass das elektrische Betriebsbremsanforderungssignal innerhalb des elektrischen Betriebsbremskreises in dieses elektronische Bremssteuergerät eingesteuert wird. In dem Bremssteuergerät kann das Betriebsbremsanforderungssignal dann achsweise oder radweise durch höhere Funktionen wie beispielsweise eine automatische achslastabhängige Bremsdruckregelung, eine Differenzschlupfregelung etc. verändert werden, bevor es in Druckregelmoduln der Vorderachse bzw. der Hinterachse eingesteuert wird. In den Druckregelmoduln sind lokale Steuergeräte installiert, die dann mittels einer Einlass-/Auslass-Magnetventilkombination, die ein Relaisventil vorsteuert, um einen von dem Betriebsbremsanforderungssignal abhängigen Bremsdruck in den zugeordneten pneumatischen Betriebsbremszylinder(n) zu erzeugen. Mittels eines jeweils in ein solches Druckregelmodul integrierten Drucksensors findet dann eine Regelung des ausgesteuerten Ist-Bremsdrucks durch Angleichung an einen durch das Betriebsbremsanforderungssignal repräsentierten Soll-Bremsdruck statt.

Ohne eine Schalteinrichtung, wie beispielsweise einen Mikroschalter oder Hall-Sensor, der durch eine rein mechanische Kontaktierung auch bei ausgeschalteter Fahrzeugzündanlage einen elektrischen Kreis schließt und die sich bei ausgeschalteter Fahrzeugzündanlage in einem ausgeschalteten Zustand oder in einem Standby-Modus befindenden elektronischen Komponenten einschaltet oder aufweckt bzw. aktiviert, wird hier eine Betätigung der Fußbetriebsbremsplatte auch bei ausgeschalteter Fahrzeugzündanlage mit Hilfe der kontaktlos arbeitenden, wenigstens einen induktiven Wegmessspule 12 in Kombination mit der Auswerteelektronik 14 erfasst.

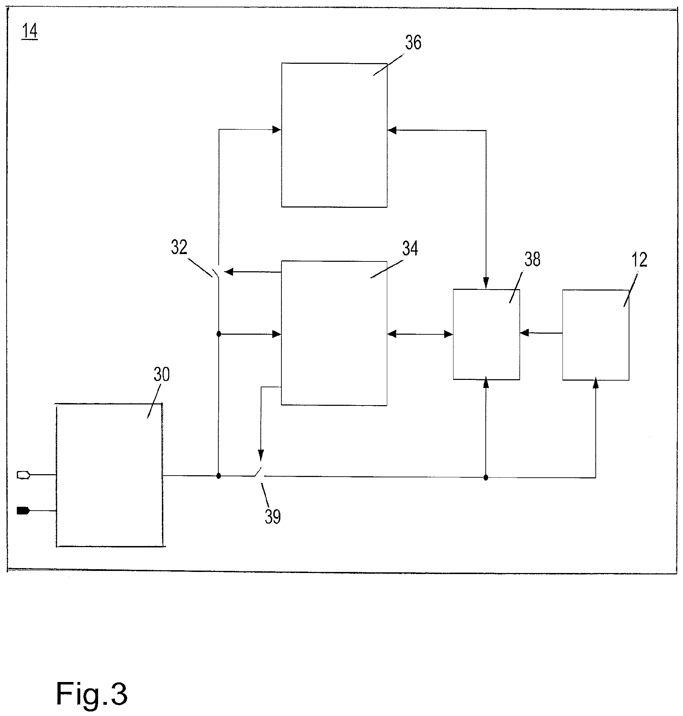

Dazu stehen, wie Fig.3 zeigt, die Wegmessspule 12 und beispielsweise ein erster Mikroprozessor 34 von zwei Mikroprozessoren 34 und 36 der Auswerteelektronik 14 auch bei ausgeschalteter Fahrzeugzündanlage vorzugsweise über einen Spannungsregler oder Spannungswandler 30 mit einer elektrischen Energiequelle, beispielsweise einer Fahrzeugbatterie mit 24V Betriebsspannung in Verbindung, wobei der Spannungswandler die Betriebsspannung von 24V auf 5V herabsetzt, welche dann an dem ersten Mikroprozessor 34 ständig ansteht. Die wenigstens eine Wegmessspule 12 und der zweite Mikroprozessor 36 sind indes über elektrische oder elektronische Schalter 32 und 39, die bevorzugt vom ersten Mikroprozessor 34 gesteuert werden, mit dem Spannungswandler 30 verbindbar.

In jeweils einem eigenen Block 38 sind den Mikroprozessoren 34 und 36 zugeordnete Komponenten wie Datenschnittstelle (A/D-Wandler) und Frequenzteiler zusammengefasst.

In dem Standby-Modus des ersten Mikroprozessors 34 ist der Verbrauch an elektrischer Energie durch den ersten Mikroprozessors 34 äußerst gering, so dass der Fahrzeugbatterie bzw. der Spannungswandler 30 bei ausgeschalteter Fahrzeugzündanlage nur sehr wenig Strom liefern muss, um diesen Standby-Modus aufrecht zu erhalten.

In der Auswerteelektronik 14 und insbesondere in dem ersten Mikroprozessor ist bevorzugt ein Generator integriert, der in Zyklen oder zyklisch ein Ereignissignal erzeugt, auf welches die Auswerteelektronik 14 hin veranlasst wird, den Standby-Modus zu verlassen, um einen Energiesparbetriebs-Modus einzunehmen. Während in dem Standby-Modus die Auswerteelektronik 14 in Kombination mit dem ersten Mikroprozessor 34 aufgrund des dann geringen fließenden elektrischen Stroms nicht in der Lage ist, eine Bewegung des Stößels 6 und damit eine Betätigung der Fußbetriebsbremsplatte zu erfassen und auszuwerten, ist dies im Energiesparbetriebs-Modus jedoch möglich.

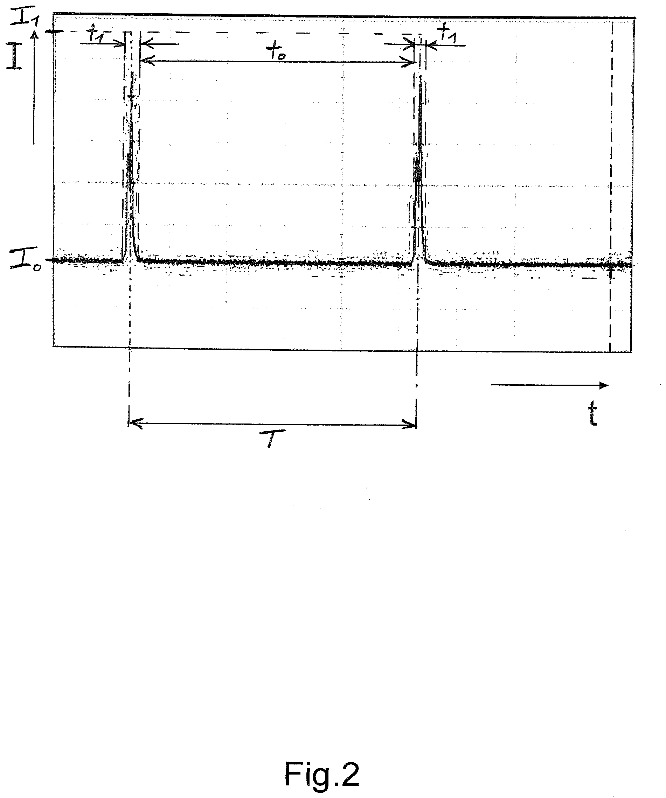

Fig.2 veranschaulicht diesen Zyklus, in dem in festen, aber vorzugsweise frei programmierbaren Zeitabständen oder Periode T, der Standby-Modus mit relativ geringem Strom I₀ aufgrund des vom Generator 34 zyklisch erzeugten Ereignissignals verlassen und der Energiesparbetriebs-Modus eingenommen wird, in dem ein wesentlich größerer Strom I₁ durch den ersten Mikroprozessor 34 und die Wegmessspule 12 fließt. Dabei ist die Zeitdauer t₁, während der Energiesparbetriebs-Modus eingenommen wird und der Strom I₁ fließt, vorzugsweise klein gegenüber der Zeitdauer t₀, während der Standby-Modus eingenommen wird und der Strom I₀ fließt, so dass nur während der relativ kurzen Zeitdauern t₁ der höhere Strom I₁ des Energiesparbetriebs-Modus fließt. Weil auch nur ein einziger Mikroprozessor 34 der beiden Mikroprozessoren 34 und 36 sowohl im Standby-Modus als auch zyklisch im Energiesparbetriebs-Modus betrieben wird, ist der Energieverbrauch in diesen Modi gering.

Besonders bevorzugt ist der in dem Energiespar-Betriebsmodus während der zyklisch auftretenden Zeitdauern t₁ herrschende Strom I₁ kleiner als ein Strom I₂, der in dem regulären Betriebsmodus bei eingeschalteter Zündung die Wegmessspule 12 und die Auswerteelektronik 14 durchfließt.

Dieser Zyklus bzw. die Periode T dieses Zyklus bzw. die Zeitdauer t₁, in dem der Energiesparbetriebs-Modus wirksam ist, dabei so bemessen, dass eine Betätigung der Fußbetriebsbremsplatte bzw. des Stößels 6 in jedem Fall, wenn auch zeitlich geringfügig verzögert erfasst werden kann. Die maximale Verzögerung der Signalerfassung und -auswertung beträgt dann gerade einmal die Periode T eines Zyklus.

Der Generator 34 ist hinsichtlich der Periode T der Zyklen des Ereignissignals, der Zeitdauer t₁, während der Energiesparbetriebs-Modus eingenommen wird, sowie der Zeitdauer t₀, während der Standby-Modus eingenommen wird, beispielsweise frei programmierbar. Zudem kann der Generator 34 ausgebildet sein, dass er durch eine Referenzzeitmessquelle insbesondere des Fahrzeugs zyklisch kalibrierbar ist.

Wenn nun die Fußbetriebsbremsplatte und damit auch der Stößel 6 vom Fahrer betätigt werden, kann dieser Vorgang von der wenigstens einen Wegmessspule 12 und dem ersten Mikroprozessor 34 während des Vorliegens des Energiesparbetriebs-Modus innerhalb einer der zyklisch vorliegenden Zeitdauern t₁ erfasst und ausgewertet werden.

Besonders bevorzugt kommuniziert dann auch der erste Mikroprozessor 34 der Auswerteelektronik 14 mit weiteren elektronischen Komponenten der elektropneumatischen Betriebsbremseinrichtung wie etwa dem elektronischen Bremssteuergerät der elektro-pneumatischen Betriebsbremseinrichtung dahingehend, dass er bei einer Erfassung einer Betätigung des Fußbetriebsbremspedals im Energiesparbetriebs-Modus ein Wecksignal für das Bremssteuergerät sowie für weitere elektronische Komponenten wie etwa die lokalen elektronischen Steuergeräte in den Druckregelmoduln erzeugt, um diese elektronischen Komponenten auch bei ausgeschalteter Zündung in einen Energiesparbetriebs-Modus oder in ihren regulären Betriebsmodus zu versetzen. Damit ist dann vorzugsweise die elektro-pneumatische Betriebsbremseinrichtung für den bestimmungsgemäßen Gebrauch z.B. für Betriebsbremsungen mit Hilfe des vorrangigen elektrischen Betriebsbremskreises einsatzfähig.

Während des ausgeschalteten Zustands der Fahrzeugzündanlage ist der zweite Mikrocontroller 36 der Auswerteelektronik 14 durch den geöffneten Schalter 32 vollständig außer Betrieb gesetzt, d.h. er ist unbestromt. Erst bei Einschalten der Fahrzeugzündanlage wird der zweite Mikrocontroller 36 der Auswerteelektronik 14 in den regulären Betriebsmodus gesetzt, indem dann der Schalter 32 über den ersten Mikroprozessor 34 der Auswerteelektronik 14 geschlossen wird. Dann ist der elektrische Kreis geschlossen, in dem die Fahrzeugbatterie, optional der Spannungswandler 30 sowie der zweiten Mikroprozessor 36 angeordnet sind. Mit dem Einschalten der Fahrzeugzündanlage wird auch der erste Mikrocontroller 34 der Auswerteelektronik 14 in seinen regulären Betriebsmodus geschaltet, damit eine dann kontinuierliche sowie redundante Erfassung und Auswertung der Betriebsbremsanforderung durch zwei Mikroprozessoren 34 und 36 erfolgen kann.

### Bezugszeichenliste

- 1: Fußbremsmodul
- 2: Stößel
- 4: Fußbremsmodul-Gehäuse
- 6: Stößel kolben
- 8: Federteller
- 9: Federmittel
- 10: Relaiskolben
- 11: Stellschraube
- 12: Wegmessspule
- 14: Auswerteelektronik
- 22: Führungskörper
- 28: Gehäuseteil
- 30: Spannungswandler
- 32: Schalter
- 34: erster Mikroprozessor
- 36: zweiter Mikroprozessor
- 38: Block
- 39: Schalter

## Patentansprüche

1. Fahrzeugeinrichtung eines Fahrzeugs, mit einer Signaleingabevorrichtung zur Eingabe von Anforderungssignalen eines Fahrer des Fahrzeugs in Bezug auf die Fahrzeugeinrichtung, welche eine Sensoreinrichtung (12) beinhaltet, die einen Betätigungsgrad eines von dem Fahrer betätigbaren Betätigungsorgans der Signaleingabevorrichtung zwischen einer eine Nichtbetätigung repräsentierenden Stellung und einer eine maximale Betätigung repräsentierenden Stellung graduell erfasst und ein diesen Betätigungsgrad repräsentierendes Betätigungssignal erzeugt, sowie eine Auswerteelektronik (14), in welche das von der Sensoreinrichtung (12) erzeugte Betätigungssignal zur Auswertung eingesteuert wird, wobei die Sensoreinrichtung (12) und/oder die Auswerteelektronik (14) ausgebildet ist (sind), in einem ausgeschalteten Zustand einer Fahrzeugzündanlage einen Standby-Modus mit gegenüber einem eingeschalteten Zustand der Fahrzeugzündanlage herrschendem Betriebsmodus verringerter elektrischer Energieaufnahme aus einer elektrischen Energiequelle einzunehmen, welche nicht ausreichend ist, um einen bestimmungsgemäßen Betrieb der Sensoreinrichtung (12) und/oder der Auswerteelektronik (14) in Form der Erfassung und Auswertung einer Betätigung des Betätigungsorgans zu gewährleisten, **dadurch gekennzeichnet, dass** die Sensoreinrichtung (12) und/oder die Auswerteelektronik (14) aber ausgebildet ist (sind) in Zyklen in einen Energiesparbetriebs-Modus gebracht zu werden, der den bestimmungsgemäßen Betrieb der Sensoreinrichtung (12) und/oder der Auswerteelektronik (14) in Form der Erfassung und Auswertung einer Betätigung des Betätigungsorgans gewährleistet.

2. Fahrzeugeinrichtung nach Anspruch 1, **dadurch gekennzeichnet, dass** bei ausgeschaltetem Zustand der Fahrzeugzündanlage und im Energiesparbetriebs-Modus die von der der Sensoreinrichtung (12) und/oder der Auswerteelektronik (14) aufgenommene elektrische Energie geringer oder gleich in Bezug auf die elektrische Energie im Betriebsmodus bei eingeschaltetem Zustand der Fahrzeugzündanlage ist.

3. Fahrzeugeinrichtung nach einem der vorhergehenden Ansprüche, **dadurch gekennzeichnet, dass** die Sensoreinrichtung (12) die Betätigung einer vom Betätigungsorgan direkt oder indirekt betätigten Komponente (6) der Signaleingabevorrichtung erfasst, wobei die Erfassung in Bezug zu dieser Komponente (6) kontaktlos oder kontaktbehaftet ist.

4. Fahrzeugeinrichtung nach einem der vorhergehenden Ansprüche, **dadurch gekennzeichnet, dass** ein Generator (34) vorgesehen ist, der in den Zyklen oder zyklisch ein Ereignissignal erzeugt, auf welches die Auswerteelektronik (14) und/oder die Sensoreinrichtung (12) hin veranlasst wird/werden, den Standby-Modus zu verlassen und den Energiesparbetriebs-Modus einzunehmen.

5. Fahrzeugeinrichtung nach Anspruch 4, **dadurch gekennzeichnet, dass** der Energiesparbetriebs-Modus in Bezug auf die Zeitdauer (t₀), in welcher der Standby-Modus herrscht, für eine kürzere Zeitdauer (t₁) eingenommen wird oder für eine Zeitdauer (t₁), welche wenigstens so lang wie die Zeitdauer (t₀) des Standby-Modus ist.

6. Fahrzeugeinrichtung nach Anspruch 4 oder 5, **dadurch gekennzeichnet, dass** der Generator (34) in die Auswerteelektronik (14) integriert ist.

7. Fahrzeugeinrichtung nach einem der Ansprüche 4 bis 6, **dadurch gekennzeichnet, dass** der Generator 34 ist hinsichtlich einer Periode (T) der Zyklen des Ereignissignals, der Zeitdauer (t₁), während der Energiesparbetriebs-Modus eingenommen wird, und/oder der Zeitdauer (t₀), während der Standby-Modus eingenommen wird, frei programmierbar ist.

8. Fahrzeugeinrichtung nach einem der Ansprüche 4 bis 7, **dadurch gekennzeichnet, dass** der Generator (34) durch eine Referenzzeitmessquelle zyklisch kalibrierbar ist.

9. Fahrzeugeinrichtung nach einem der vorhergehenden Ansprüche, **dadurch gekennzeichnet, dass** die Auswerteelektronik (14) mit weiteren elektronischen Komponenten der Fahrzeugeinrichtung und insbesondere mit wenigstens einer Steuer- oder Regelelektronik des Fahrzeugsystems kommuniziert und ausgebildet ist, dass sie bei einer Erfassung einer Betätigung des Betätigungsorgans im Energiesparbetriebs-Modus ein Wecksignal für wenigstens eine weitere elektronische Komponente und insbesondere für die wenigstens eine Steuer- oder Regelelektronik des Fahrzeugsystems erzeugt, um diese auch bei ausgeschalteter Zündung in ihren Betriebsmodus zu versetzen.

10. Fahrzeugeinrichtung nach einem der vorhergehenden Ansprüche, **dadurch gekennzeichnet, dass** die Auswerteelektronik (14) der Signaleingabeeinrichtung wenigstens einen Mikroprozessoren (34, 36) aufweist.

11. Fahrzeugeinrichtung nach Anspruch 10, **dadurch gekennzeichnet, dass** die Auswerteelektronik (14) der Signaleingabeeinrichtung wenigstens zwei Mikroprozessoren (34, 36) aufweist, von welchen lediglich ein erster Mikroprozessor (34) im ausgeschalteten Zustand der Fahrzeugzündanlage zyklisch in den Standby-Modus und in den Energiespar-Betriebsmodus gesetzt wird, während im ausgeschalteten Zustand der Fahrzeugzündanlage wenigstens ein weiterer Mikrocontroller (36) der Auswerteelektronik (14) vollständig außer Betrieb gesetzt ist und erst bei Einschalten der Fahrzeugzündanlage in den Betriebmodus gesetzt wird.

12. Fahrzeugeinrichtung nach einem der vorhergehenden Ansprüche, **dadurch gekennzeichnet, dass** wenigstens ein Mikrocontroller der Auswerteelektronik einen Standby-Modus aufweist.

13. Fahrzeugeinrichtung nach einem der vorhergehenden Ansprüche, **dadurch gekennzeichnet, dass** die Auswerteelektronik (14) und/oder die Sensoreinrichtung (12) von einer von der elektrischen Energiequelle des Fahrzeugs stromversorgten Einrichtung des Fahrzeugs mit einem Spannungswert (5V) versorgt wird/werden, welche kleiner als der von der elektrischen Energiequelle gelieferte Spannungswert (24V) ist.

14. Fahrzeugeinrichtung nach Anspruch 13, **dadurch gekennzeichnet, dass** die Auswerteelektronik (14) und/oder die Sensoreinrichtung (12) von der elektrischen Energiequelle über einen Spannungsregler oder Spannungswandler (30) mit elektrischer Energie versorgt werden, welcher den von der elektrischen Energiequelle des Fahrzeugs gelieferte Spannungswert (24V) auf einen demgegenüber reduzierten Spannungswert (5V) erniedrigt.

15. Fahrzeugeinrichtung nach einem der vorhergehenden Ansprüche, **dadurch gekennzeichnet, dass** sie eine elektrische, elektro-pneumatische oder elektro-hydraulische Fahrzeugeinrichtung ist.

16. Fahrzeugeinrichtung nach einem der vorhergehenden Ansprüche, **dadurch gekennzeichnet, dass** sie eine elektro-pneumatische oder elektrische Betriebsbremseinrichtung eines Fahrzeugs mit wenigstens einem elektrischen oder elektro-pneumatischen Betriebsbremskreis ist, beinhaltend eine Betriebsbremspedaleinrichtung als Signaleingabevorrichtung mit einem Fußbetriebsbremspedal als Betätigungsorgan und wenigstens einem elektrischen Kanal, welcher die Sensoreinrichtung (12) sowie die Auswerteelektronik (14) beinhaltet, wobei die Sensoreinrichtung (12) einen Betätigungsweg und/oder einen Betätigungswinkel des Fußbetriebsbremspedals direkt oder indirekt erfasst.

17. Fahrzeugeinrichtung nach einem der Ansprüche 1 bis 15, **dadurch gekennzeichnet, dass** sie eine Parkbremseinrichtung mit einer Hand- oder Fußbedieneinrichtung als Signaleingabevorrichtung sowie einem Fußpedal oder einem Handbetätigungsorgan als Betätigungsorgan, eine Kupplungseinrichtung mit einer Kupplungspedalbedieneinrichtung als Signaleingabevorrichtung sowie mit einem Kupplungsfußpedal als Betätigungsorgan oder eine Gaspedaleinrichtung mit einer Gaspedalbedieneinrichtung als Signaleingabevorrichtung sowie mit einem Gasfußpedal als Betätigungsorgan ist.

18. Fahrzeug mit einer Fahrzeugeinrichtung nach einem der vorhergehenden Ansprüche.

## Claims

1. Vehicle device of a vehicle, having a signal input device for the input of request signals by a driver of the vehicle with regard to the vehicle device, which device comprises a sensor device (12) which gradually senses an actuation level of an actuation element of the signal input device that can be actuated by the driver, between a position that represents non-actuation and a position that represents a maximum actuation level, and generates a signal that represents the said actuation level, and also comprises an electronic evaluation unit (14) to which the actuation signal generated by the sensor device (12) is sent, such that the sensor device (12) and/or the electronic evaluation unit (14) is/are designed, when a vehicle ignition is switched off, to enter a stand-by mode in which less electrical energy is consumed from a source of electrical energy compared with an operating mode in which the vehicle ignition is switched on, which reduced energy consumption is not sufficient to ensure the intended operation of the sensor device (12) and/or the electronic evaluation unit (14) in the sense of detecting and evaluating an actuation of the actuation element, **characterised in that** the sensor device (12) and/or the electronic evaluation unit (14), however, is/are designed to switch in a cyclic manner into an energy-saving operating mode which ensures the intended operation of the sensor device (12) and/or of the electronic evaluation unit (14) in the sense of detecting and evaluating an actuation of the actuation element.

2. Vehicle device according to Claim 1, **characterised in that** when the vehicle ignition is switched off and in the energy-saving operating mode, the electrical energy consumed by the sensor device(12) and/or the electronic evaluation unit (14) is less than, or the same as, the electrical energy consumed in the operating mode when the vehicle ignition is switched on.

3. Vehicle device according to either of the preceding Claims, **characterised in that** the sensor device (12) detects the actuation of a component (6) of the signal input device actuated directly or indirectly by the actuation element, this detection relating to the said component (6) taking place with or without contact.

4. Vehicle device according to any of the preceding claims, **characterised in that** a generator (34) is provided, which in cycles or in a cyclic manner produces an event signal which prompts the electronic evaluation unit (14) and/or the senor device (12) to exit the standby mode and adopt the energy-saving operating mode.

5. Vehicle device according to Claim 4, **characterised in that** relative to the time duration (t₀) in which the standby mode prevails, the energy-saving operating mode is adopted for a shorter time (t₁) or for a time (t₁) which is at least as long as the duration (t₀) of the standby mode.

6. Vehicle device according to Claims 4 or 5, **characterised in that** the generator (34) is integrated in the electronic evaluation unit (14).

7. Vehicle device according to any of Claims 4 to 6, **characterised in that** the generator (34) can be freely programmed in relation to a period (T) of the cycles of the event signal, the time (t₁) during which the energy-saving operating mode is adopted, and/or the time (t₀) during which the standby mode is adopted.

8. Vehicle device according to any of Claims 4 to 7, **characterised in that** the generator (34) can be calibrated cyclically by means of a reference time-measurement source.

9. Vehicle device according to any of the preceding claims, **characterised in that** the electronic evaluation unit (14) communicates with and is designed with further electronic components of the vehicle device and in particular with at least one electronic control or regulation unit of the vehicle device, so that when an actuation of the actuation element is detected during the energy-saving operation mode it generates a wake-up signal for at least one further electronic component and in particular for the said at least one electronic control or regulation unit of the vehicle device, in order to switch the latter into its operating mode even when the ignition is switched off.

10. Vehicle device according to any of the preceding claims, **characterised in that** the electronic evaluation unit (14) of the signal input device comprises at least one microprocessor (34, 36).

11. Vehicle device according to Claim 10, **characterised in that** the electronic evaluation unit (14) of the signal input device comprises at least two microprocessors (34, 36), of which only a first microprocessor (34) operates cyclically in the standby mode and in the energy-saving operating mode when the vehicle ignition is switched off, whereas when the vehicle ignition is switched off at least one further microcontroller (36) of the electronic evaluation unit (14) is completely deactivated and only when the vehicle ignition is switched on is it returned to the operating mode.

12. Vehicle device according to any of the preceding claims, **characterised in that** the at least one microcontroller of the electronic evaluation unit has a standby mode.

13. Vehicle device according to any of the preceding claims, **characterised in that** the electronic evaluation unit (14) and/or the sensor device (12) is/are supplied with a voltage (5 V) by a device of the vehicle supplied with current from the electrical energy source of the vehicle, which voltage is lower than the voltage value (24 V) delivered by the electrical energy source.

14. Vehicle device according to Claim 13, **characterised in that** the electronic evaluation unit (14) and/or the sensor device (12) are supplied with electrical energy from the electrical energy source via a voltage regulator or voltage transformer which reduces the voltage value (24 V) delivered by the electrical energy source of the vehicle to a lower voltage (5 V).

15. Vehicle device according to any of the preceding claims, **characterised in that** it is an electrical, electro-pneumatic or electro-hydraulic vehicle device.

16. Vehicle device according to any of the preceding claims, **characterised in that** it is an electro-pneumatic or electric service brake device of a vehicle, having at least one electric or electro-pneumatic service brake circuit which contains a service brake pedal device as the signal input device with a service brake foot-pedal as the actuation element and at least one electric channel containing the sensor device (12) and the electronic evaluation unit (14), wherein the sensor device (12) determines an actuation path and/or an actuation angle of the service brake foot-pedal, either directly or indirectly.

17. Vehicle device according to any of Claims 1 to 15, **characterised in that** it is a parking brake device with a hand-operated or foot-operated device as the signal input device and a foot-pedal or a hand-actuated element as the actuation element, a cutch device with a clutch-pedal device as the signal input device, and with a clutch foot-pedal as the actuation element, or an accelerator pedal device with an accelerator pedal operating element as the signal input device and with an accelerator foot-pedal as the actuation element.

18. Vehicle with a vehicle device according to any of the preceding claims.

## Revendications

1. Dispositif de véhicule d'un véhicule, comprenant un système d'entrée de signal pour l'entrée de signaux de requête d'un conducteur du véhicule relativement au dispositif de véhicule, qui comporte un dispositif (12) de capteur, qui relève un degré d'actionnement d'un organe d'actionnement, pouvant être actionné par le conducteur, du système d'entrée de signal, entre une position représentant un inactionnement et une position représentant un actionnement maximum et produit un signal d'actionnement représentant ce degré d'actionnement, ainsi qu'une électronique (14) d'exploitation, dans laquelle le signal d'actionnement produit par le dispositif (12) de capteur est entré pour l'exploitation, le dispositif (12) de capteur et/ou l'électronique (14) d'exploitation étant constitué pour, dans un état hors circuit d'un système d'allumage du véhicule, prendre un mode de standby absorbant moins d'énergie électrique d'une source d'énergie électrique que dans un mode de fonctionnement régnant à l'état mis en circuit du système d'allumage du véhicule, absorption qui n'est pas suffisante, sous la forme du relevé et de l'exploitation d'un actionnement de l'organe d'actionnement, pour assurer un fonctionnement conforme aux prescriptions du dispositif (12) de capteur et/ou de l'électronique (14) d'exploitation, **caractérisé en ce que** le dispositif (12) de capteur et/ou l'électronique (14) d'exploitation est/sont constitué(s) toutefois pour être mis en cycle dans un mode de fonctionnement d'économie d'énergie, qui assure, sous la forme de la détection et de l'exploitation d'un actionnement de l'organe d'actionnement, le fonctionnement conforme aux prescriptions du dispositif (12) de capteur et/ou de l'électronique (14) d'exploitation.

2. Dispositif de véhicule suivant la revendication 1, **caractérisé en ce que**, lorsque le système d'allumage du véhicule est à l'état hors circuit et dans le mode de fonctionnement d'économie d'énergie, l'énergie électrique absorbée par le dispositif (12) de capteur et/ou l'électronique (14) d'exploitation est inférieure ou égale à l'énergie électrique dans le mode de fonctionnement dans l'état en circuit du système d'allumage du véhicule.

3. Dispositif de véhicule suivant l'une des revendications précédentes, **caractérisé en ce que** le dispositif (12) de capteur détecte le fonctionnement d'un composant (6) du système d'entrée du signal, actionné directement ou indirectement par l'organe d'actionnement, la détection étant sans contact ou avec contact relativement à ce composant (6).

4. Dispositif de véhicule suivant l'une des revendications précédentes, **caractérisé en ce qu'**il est prévu un générateur (34), qui produit dans les cycles ou cycliquement un signal d'événement, sur lequel l'électronique (14) d'exploitation et/ou le dispositif (12) de capteur fait/font que le mode de standby soit quitté et que le mode de fonctionnement d'économie d'énergie soit pris.

5. Dispositif de véhicule suivant la revendication 4, **caractérisé en ce que** le mode de fonctionnement d'économie d'énergie est pris relativement à la durée (t₀), dans laquelle règne le mode de standby, pendant une durée (t₁) assez courte ou pendant une durée (t₁), qui est au moins aussi longue que la durée (t₀) du mode de standby.

6. Dispositif de véhicule suivant la revendication 4 ou 5, **caractérisé en ce que** le générateur (34) est intégré à l'électronique (14) d'exploitation.

7. Dispositif de véhicule suivant l'une des revendications 4 à 6, **caractérisé en ce que** le générateur (34) est, en ce qui concerne une période (T) des cycles du signal d'événement, la durée (t₁), pendant laquelle le mode de fonctionnement d'économie d'énergie est pris, et/ou la durée (t₀), pendant laquelle le mode de standby est pris, programmable librement.

8. Dispositif de véhicule suivant l'une des revendications 4 à 7, **caractérisé en ce que** le générateur (34) peut être calibré cycliquement par une source de mesure de temps de référence.

9. Dispositif de véhicule suivant l'une des revendications précédentes, **caractérisé en ce que** l'électronique (14) d'exploitation communique avec d'autres composants électroniques du dispositif du véhicule et notamment avec au moins une électronique de commande ou de régulation du système du véhicule et est constituée de manière à ce que, lors d'une détection d'un actionnement de l'organe d'actionnement dans le mode de fonctionnement en économie d'énergie, elle produise un signal de sonnerie pour au moins un autre composant électronique et notamment pour la au moins une électronique de commande ou de régulation du système du véhicule, afin de mettre celle-ci, également lorsque l'allumage est hors circuit, dans son mode de fonctionnement.

10. Dispositif de véhicule suivant l'une des revendications précédentes, **caractérisé en ce que** l'électronique (14) d'exploitation du dispositif d'entrée de signal a au moins un microprocesseur (34, 36).

11. Dispositif de véhicule suivant la revendication 10, **caractérisé en ce que** l'électronique (14) d'exploitation du dispositif d'entrée de signal a au moins deux microprocesseurs (34, 36), dont seulement un premier microprocesseur (34) est, dans l'état mis hors circuit de l'installation d'allumage du véhicule, mis cycliquement dans le mode de standby et dans le mode de fonctionnement en économie d'énergie, tandis que dans l'état mis hors circuit du système d'allumage du véhicule, au moins une autre micro-unité (36) de commande de l'électronique (14) d'exploitation est mise complètement hors de fonctionnement et n'est mise dans le mode de fonctionnement que lors de la mise en circuit du système d'allumage du véhicule.

12. Dispositif de véhicule suivant l'une des revendications précédentes, **caractérisé en ce qu'**au moins une micro-unité de commande de l'électronique d'exploitation a un mode de standby.

13. Dispositif de véhicule suivant l'une des revendications précédentes, **caractérisé en ce que** l'électronique (14) d'exploitation et/ou le dispositif (12) de capteur est/sont alimenté(s) par un dispositif du véhicule alimenté en courant par la source d'énergie électrique du véhicule et ayant une valeur (5V) de tension, qui est plus petite que la valeur (24V) de tension fournie par la source d'énergie électrique.

14. Dispositif de véhicule suivant la revendication 13, **caractérisé en ce que** l'électronique (14) d'exploitation et/ou le dispositif (12) de capteur sont alimentés en énergie électrique par la source d'énergie électrique, par l'intermédiaire d'un régleur de tension ou d'un convertisseur (30) de tension, qui abaisse la valeur (24V) de tension fournie par la source d'énergie électrique du véhicule à une valeur (5V) de tension réduite par rapport à celle-ci.

15. Dispositif de véhicule suivant l'une des revendications précédentes, **caractérisé en ce que** c'est un dispositif de véhicule électrique, électropneumatique ou électrohydraulique.

16. Dispositif de véhicule suivant l'une des revendications précédentes, **caractérisé en ce que** c'est un dispositif de frein de service électropneumatique ou électrique d'un véhicule ayant au moins un circuit de frein de service électrique ou électropneumatique, un dispositif à pédale de frein de service comme système d'entrée du signal, ayant une pédale de frein de service comme organe d'actionnement et au moins un canal électrique, qui comporte le dispositif (12) de capteur, ainsi que l'électronique (14) d'exploitation, le dispositif (12) de capteur détectant directement ou indirectement un trajet d'actionnement et/ou un angle d'actionnement de la pédale de frein de service.

17. Dispositif de véhicule suivant l'une des revendications 1 à 15, **caractérisé en ce que** c'est un dispositif de frein de stationnement ayant un dispositif de service manuel ou au pied comme système d'entrée de signal, ainsi qu'une pédale ou un organe d'actionnement manuel comme organe d'actionnement, un dispositif d'accouplement ayant un dispositif de service de pédale d'accouplement comme système d'entrée de signal, ainsi qu'une pédale d'accouplement comme organe d'actionnement ou un dispositif à pédale à gaz ayant un dispositif de service à pédale à gaz comme système d'entrée de signal, ainsi qu'une pédale à gaz comme organe d'actionnement.

18. Véhicule ayant un dispositif de véhicule suivant l'une des revendications précédentes.
